# EUROPÄISCHE PATENTSCHRIFT

(11) **EP 3 348 454 B1**
(45) Veröffentlichungstag und Bekanntmachung des Hinweises auf die Patenterteilung: **18.12.2019**
(21) Anmeldenummer: 17208012.9
(22) Anmeldetag: 18.12.2017
(51) Int. Cl.: B62D 11/18

(54) **GETRIEBE FÜR EIN RAD- UND/ODER KETTENFAHRZEUG**
TRANSMISSION FOR A WHEELED AND/OR TRACKED VEHICLE
TRANSMISSION POUR UN VÉHICULE SUR ROUES ET/OU À CHENILLES

(30) Priorität: 17.01.2017 DE 102017200614
(43) Veröffentlichungstag der Anmeldung: 18.07.2018
(73) Patentinhaber: ZF Friedrichshafen AG, 88046 Friedrichshafen (DE)
(72) Erfinder: Sonnenburg, Henning, 88214 Ravensburg (DE)

(56) Entgegenhaltungen:
- EP-A1- 0 493 206
- WO-A1-2014/146838

## Beschreibung

Die vorliegende Erfindung betrifft ein Getriebe für ein Rad- und/oder Kettenfahrzeug gemäß der im Oberbegriff des Patentanspruchs 1 näher definierten Art.

Aus der US 2016/0107686 A1 ist ein gesteuertes Differential bekannt. Das Differential umfasst ein Paar Planetenträger, die angeordnet sind, um mit entsprechenden Wellen zu drehen, ein Paar Hohlräder, die durch eine Zwischenwelle derart miteinander verbunden sind, dass die Hohlräder gemeinsam rotieren, Planetengetriebe und ein Paar Sonnenräder. Die Sonnenräder sind mit wenigstens einem Lenkmotor gekoppelt, um eine Drehung der Sonnenräder in zueinander entgegengesetzten Richtungen zu ermöglichen.

Aus der DE 10 2012 216 661 A1 ist ein Kettenfahrzeug mit zwei Summierungsgetrieben bekannt, die jeweils als Planetengetriebe ausgebildet sind. Die Hohlräder der beiden Summierungsgetriebe sind mit einer Zentralwelle verbunden, so dass beide Summierungsgetriebe über die Zentralwelle mit gleicher Drehzahl beaufschlagt werden können. Jedes Sonnenrad der Summierungsgetriebe ist über eine Nullwelle mit einem zugeordneten Hydromotor verbunden. Über den Hydromotor wird zum Lenken des Kettenfahrzeugs eine vorbestimmte Drehzahl an den Sonnenrädern vorgegeben.

Ferner ist aus der WO 2014/146838 A1 eine Antriebseinrichtung für ein Kettenfahrzeug bekannt, mit einer ersten und einer zweiten Planetenstufe, wobei die erste Planetenstufe der einen Fahrzeugseite zugeordnet und deren erster Planetenträger mit einer ersten Ausgangswelle verbunden ist. Die zweite Planetenstufe ist der anderen Fahrzeugseite zugeordnet und deren zweiter Planetenträger ist mit einer zweiten Ausgangswelle verbunden. Die Sonnenräder der beiden Planetenstufen sind über eine Nullwelle und mehrere Stirnradstufen miteinander gekoppelt. Die Antriebseinrichtung weist ferner ein erstes Schaltelement auf, mittels dem eine Antriebswelle eines Unterstützungsmotors in einer ersten Schaltstellung mit den Hohlrädern der beiden Planetenstufen und in einer zweiten Schaltstellung mit der genannten Nullwelle verbunden ist, welche die beiden Sonnenräder miteinander koppelt. Die beiden Planetenstufen sind in der Antriebseinrichtung gemäß der WO 2014/146838 A1 jeweils Teil eines der jeweiligen Fahrzeugseite zugeordneten Summierungsgetriebes, wobei die Summierungsgetriebe jeweils als Einzelkomponenten ausgebildet und auf der jeweils zugeordneten Antriebsseite angeordnet sind.

Die der Erfindung zugrundeliegende Aufgabe wird durch die Merkmale des Patentanspruchs 1 gelöst. Weitere vorteilhafte Ausgestaltungen ergeben sich aus den Unteransprüchen und den Zeichnungen.

Es wird ein Getriebe für Rad- und/oder Kettenfahrzeuge vorgeschlagen, das eine antriebsseitige Eingangswelle umfasst, die vorzugsweise mit einer Antriebseinheit lösbar verbunden werden kann. Des Weiteren umfasst das Getriebe eine erste Planetenstufe, die im eingebauten Zustand des Getriebes einer der beiden Fahrzeugseiten zugeordnet ist. Der erste Planetenträger der ersten Planetenstufe ist mit einer ersten Ausgangswelle verbunden. Ferner umfasst das Getriebe eine zweite Planetenstufe, die im eingebauten Zustand des Getriebes der anderen Fahrzeugseite zugeordnet ist. Der zweite Planetenträger der zweiten Planetenstufe ist mit einer zweiten Ausgangswelle verbunden. Außerdem umfasst das Getriebe eine Koppelstufe, die den beiden Planetenstufen zugeordnet ist und mittels der die Sonnenräder der beiden Planetenstufen miteinander verbunden sind. Das Getriebe weist ein erstes Schaltelement auf, mittels dem die Eingangswelle in einer ersten Schaltstellung mit den Hohlrädern der beiden Planetenstufen und in einer zweiten Schaltstellung mit der Koppelstufe verbunden ist. Hierdurch kann die Koppelstufe als Differenzial wirken, insbesondere wenn sich das erste Schaltelement in seiner ersten Schaltstellung befindet, da hierdurch die Eingangswelle von der Koppelstufe entkoppelt ist und demnach über die beiden Sonnenräder, die über die Koppelstufe miteinander verbunden sind, ein Momentenausgleich zwischen den beiden Planetenstufen erfolgen kann. Des Weiteren kann die Koppelstufe genutzt werden, um eine Pivotdrehung des Fahrzeugs durchführen zu können. Bei einer derartigen Pivotdrehung wird das Fahrzeug an Ort und Stelle um seine Hochachse rotiert. Zum Durchführen der Pivot-drehung muss das erste Schaltelement in seine zweite Schaltstellung geschalten werden, so dass die Eingangswelle mit der Koppelstufe verbunden ist. Die Hohlräder der beiden Planetenstufen sind somit von der Eingangswelle entkoppelt. Das an der Eingangswelle anliegende Drehmoment wird somit auf die Koppelstufe übertragen, die ein entsprechendes Drehmoment in der entsprechenden Drehrichtung auf die beiden Sonnenräder der beiden Planetenstufen überträgt, dass die über die erste Ausgangswelle verbundenen Räder oder Ketten der einen Fahrzeugseite nach vorwärts gedreht werden und die Räder oder Ketten der anderen Fahrzeugseite rückwärts gedreht werden. Hierdurch kann vorteilhafterweise das an der Eingangswelle anliegende Drehmoment für eine entsprechende Pivotdrehung genutzt werden.

Die Koppelstufe umfasst zumindest zwei ineinander kämmende Zahnräder und ist als Stirnradstufe ausgebildet. Hierbei befinden sich die beiden Planetenstufen in einer ersten Getriebeebene und die Koppelstufe in einer antriebsseitig versetzten zweiten Getriebeebene. Vorteilhafterweise kann das Getriebe hierdurch in der Fahrzeuglängserstreckung sehr kompakt ausgebildet werden. Hierdurch ergibt sich eine sehr gute Gewichtsverteilung des Fahrzeugs.

Auch ist es vorteilhaft, wenn die Koppelstufe ein koaxial zur Eingangswelle angeordnetes und/oder über das erste Schaltelement mit der Eingangswelle koppelbares erstes Zahnrad aufweist. Auch ist es vorteilhaft, wenn die Koppelstufe zwei jeweils einem der beiden Planetenstufen zugeordnete Außenräder umfasst. Des Weiteren ist es vorteilhaft, wenn die Koppelstufe ein erstes Zwischenrad aufweist, das zwischen dem Zentralrad und dem der ersten Planetenstufe zugeordneten ersten Außenrad angeordnet ist. Zusätzlich oder alternativ ist es ferner vorteilhaft, wenn die Koppelstufe ein zweites Zwischenrad aufweist, das zwischen dem Zentralrad und dem der zweiten Planetenstufe zugeordneten zweiten Außenrad angeordnet ist. Hierdurch kann vorteilhafterweise ein Drehmomentausgleich zwischen den beiden Sonnenrädern bewirkt werden. Ferner können die beiden Sonnenräder über eine derart ausgebildete Koppelstufe mit einem entsprechend orientierten Drehmoment beaufschlagt werden, dass das Fahrzeug eine Pivotdrehung durchführen kann.

In einer vorteilhaften Weiterbildung der Erfindung weist das Getriebe einen Lenkmotor auf. Dieser ist vorzugsweise als hydraulischer Lenkmotor ausgebildet. Zusätzlich oder alternativ ist es vorteilhaft, wenn das Getriebe ein zweites Schaltelement aufweist. Mittels diesem ist der Lenkmotor in einer ersten Schaltstellung von der Koppelstufe, insbesondere vom ersten Zwischenrad, entkoppelt und in einer zweiten Schaltstellung mit der Koppelstufe, insbesondere dem ersten Zwischenrad, gekoppelt. Vorteilhafterweise kann somit beim in der ersten Schaltstellung befindlichen zweiten Schaltelement ein Drehzahlausgleich zwischen den Sonnenrädern erfolgen, da der Lenkmotor von der Koppelstufe entkoppelt ist. Das Getriebe wirkt wie ein Differentialgetriebe. In der zweiten Schaltstellung kann der Lenkmotor beispielsweise dazu dienen, die Koppelstufe in einer vorgeschriebenen Stellung zu arretieren, so dass die beiden Sonnenräder festgelegt sind. Ebenso kann beim Aktivieren des Lenkmotors ein entsprechendes Lenkdrehmoment in die Koppelstufe eingebracht werden, so dass die beiden Sonnenräder stufenlos in gegenläufige Richtungen rotiert werden können, um die Räder oder den Kettenantrieb einer der beiden Fahrzeugseiten schneller und die Räder oder den Kettenantrieb der jeweils anderen Fahrzeugseite langsamer antreiben zu können, um hierdurch ein Gieren des Fahrzeugs hervorrufen zu können.

Um über die Eingangswelle und das erste Schaltelement ein Drehmoment auf die beiden Hohlräder übertragen zu können, ist es vorteilhaft, wenn die beiden Hohlräder, insbesondere über eine Hohlradstufe, miteinander verbunden sind. Die Hohlradstufe ist hierbei vorzugsweise als Stirnradstufe ausgebildet. Ferner befindet sich die Hohlradstufe vorzugsweise in der Getriebeebene der beiden Planetenstufen. Die Hohlradstufe weist vorzugsweise ein koaxial zur Eingangswelle angeordnetes und/oder über das erste Schaltelement mit der Eingangswelle koppelbares zweites Zentralrad auf. Das zweite Zentralrad kämmt hierbei vorzugsweise in eine Außenverzahnung eines der beiden Hohlräder ein. Zusätzlich oder alternativ ist es vorteilhaft, wenn die Hohlradstufe ein zwischen einem der beiden Hohlräder und dem zweiten Zentralrad angeordnetes drittes Zwischenrad aufweist. Hierdurch kann eine Drehrichtungsumkehrung erfolgen, so dass die beiden Hohlräder in zueinander entgegengesetzte Richtungen rotiert werden können. Das dritte Zwischenrad kämmt hierbei in das zweite Zentralrad und in eine Außenverzahnung des jeweils anderen Hohlrades ein.

Vorteilhaft ist es, wenn die Koppelstufe bei in der ersten Schaltstellung befindlichem ersten Schaltelement und/oder bei in der ersten Schaltstellung befindlichem zweiten Schaltelement ein Differenzialgetriebe ausbildet. Die Koppelstufe ist demnach weder mit der Eingangswelle noch - bei vorhandenem Lenkmotor - mit dem Lenkmotor gekoppelt, so dass ein Drehzahlausgleich über die beiden miteinander gekoppelten Sonnenräder erfolgen kann.

Auch ist es vorteilhaft, wenn die Koppelstufe bei in der ersten Schaltstellung befindlichem ersten Schaltelement und in der zweiten Schaltstellung befindlichen zweiten Schaltelement ein Lenkgetriebe ausbildet. Demnach kann für eine Geradeausfahrt im Normalbetrieb die Koppelstufe über den Lenkmotor arretiert werden. Zusätzlich oder alternativ kann das Getriebe hierfür ein mit der Koppelstufe verbundenes Arretierelement, insbesondere eine Bremse, aufweisen. Bei einem Radfahrzeug entsteht dadurch die Funktion einer Differenzialsperre. Um das Fahrzeug während der Fahrt lenken zu können, kann durch die als Lenkgetriebe ausgebildete Koppelstufe bei entsprechender Aktivierung des Lenkmotors eine an den beiden Fahrzeugseiten unterschiedliche Drehzahl eingebracht werden.

In einer vorteilhaften Weiterbildung der Erfindung bildet die Koppelstufe bei in der zweiten Schaltstellung befindlichem ersten Schaltelement und in der ersten Schaltstellung befindlichen zweiten Schaltelement ein Pivotgetriebe. Mittels diesem kann das Rad- und/oder Kettenfahrzeug über die an der Eingangswelle anliegende Antriebskraft an Ort und Stelle um seine Hochachse gedreht werden. Hierdurch kann vorteilhafterweise der Lenkmotor kleiner dimensioniert werden, da dieser nicht mehr zur Durchführung einer derartigen Pivotdrehung benötigt wird. Er dient demnach vorzugsweise ausschließlich dazu, um im Normalbetrieb ein Lenken des Fahrzeugs bewirken zu können.

Vorteilhaft ist es, wenn das Getriebe eine, insbesondere als Stirnradstufe ausgebildete Lenkmotorstufe aufweist, die vorzugsweise mit der Koppelstufe verbunden und/oder verbindbar ist. Die Lenkmotorstufe befindet sich hierbei vorzugsweise in einer zur Getriebeebene der Koppelstufe antriebsseitig vorgelagerten dritten Getriebeebene. Vorzugsweise umfasst die Lenkmotorstufe ein lenkmotorseitiges erstes und ein koppelstufenseitiges zweites Zahnrad. Hierdurch kann das Drehmoment des Lenkmotors entsprechend gut übersetzt werden.

Um den Lenkmotor mit der Koppelstufe verbinden und entkoppeln zu können, ist es vorteilhaft, wenn das zweite Schaltelement zwischen dem Lenkmotor und der Lenkmotorstufe, insbesondere dem ersten Zahnrad, oder alternativ zwischen der Lenkmotorstufe, insbesondere dem zweiten Zahnrad, und der Koppelstufe, insbesondere den ersten Zwischenrad, angeordnet ist.

Um das Abtriebsmoment entsprechend gut übersetzen zu können, ist es vorteilhaft, wenn jedem der beiden Planetenstufen, insbesondere in einer den Planetenstufen abtriebsseitig nachgeschalteten separaten Getriebeebene jeweils eine Stirnradstufe nachgeschalten ist. Die Stirnradstufen verbinden hierbei den jeweiligen Planetenträger der beiden Planetenstufen mit der jeweils zugeordneten Ausgangswelle.

Ferner ist es vorteilhaft, wenn jedem der beiden Planetenstufen zumindest eine Bremse nachgeschalten ist, die am jeweiligen Planetenträger oder an der jeweiligen Ausgangswelle angreift.

Insbesondere bei einem Amphibienfahrzeug ist es vorteilhaft, wenn die beiden Antriebswellen zweigeteilt sind und jeweils einen sich im eingebauten Zustand des Getriebes in Richtung der Fahrzeugfront erstreckenden ersten Wellenteil und einen in Richtung des Fahrzeughecks erstreckenden zweiten Wellenteil aufweist. Vorzugsweise kann die Antriebskraft demnach entweder auf den ersten Wellenteil oder auf den zweiten Wellenteil übertragen werden. Diesbezüglich ist es ferner vorteilhaft, wenn jeder Antriebswelle ein drittes Schaltelement zugeordnet ist, das in einer ersten Schaltstellung den ersten Wellenteil und in einer zweiten Schaltstellung den zweiten Wellenteil mit der jeweiligen Planetenstufe, insbesondere mittelbar über die dazwischengeschaltete Stirnradstufe, verbindet.

Vorteilhaft ist es, wenn das erste, zweite und/oder dritte Schaltelement als Kupplung, insbesondere Klauenkupplung und/oder Lamellenkupplung, ausgebildet ist.

Nachfolgend ist die Erfindung anhand von Zeichnungen näher erläutert. Es zeigen:
Fig. 1 eine schematische Draufsicht eines Fahrzeugs mit einer aufgelösten Bauweise zwischen einer Antriebseinheit und einem Getriebe,
Fig. 2 eine schematische Draufsicht eines alternativen Ausführungsbeispiels eines Fahrzeugs mit aufgelösten Bauweise,
Fig. 3 eine schematische Detailansicht des Getriebes gemäß einem ersten Ausführungsbeispiel und
Fig. 4 eine schematische Detailansicht des Getriebes gemäß einem zweiten Ausführungsbeispiel.

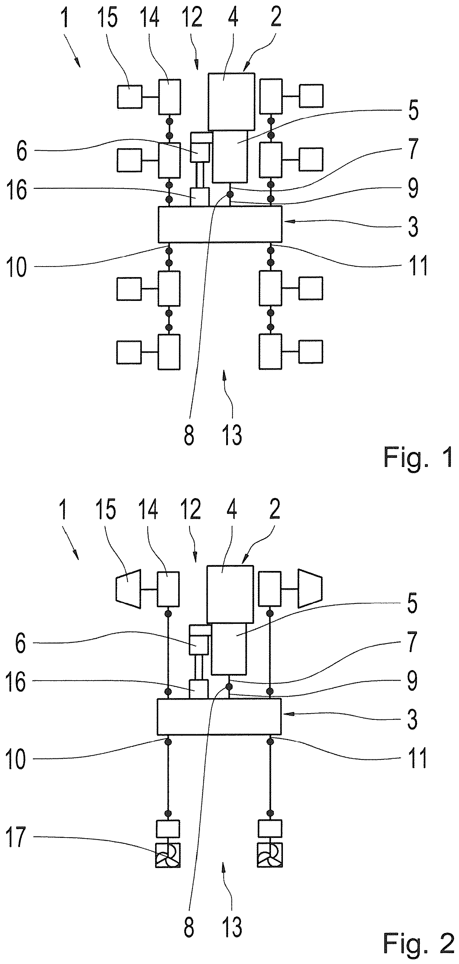

Fig. 1 zeigt eine schematische Ansicht eines Antriebsstrangs eines Fahrzeugs 1, das vorliegend insbesondere ein Radfahrzeug und/oder ein Kettenfahrzeug ist. Das Fahrzeug 1 weist eine Antriebseinheit 2 und ein Getriebe 3 auf. Die Antriebseinheit 2 und das Getriebe 3 sind lösbar miteinander verbunden, so dass diese jeweils ausgetauscht werden können.

Die Antriebseinheit 2 umfasst einen Antriebsmotor 4 und ein Schaltgetriebe 5. Des Weiteren umfasst die Antriebseinheit 2 bei einem Kettenfahrzeug zwingend und bei einem Radfahrzeug optional eine hydraulische Pumpe 6. Eine Abtriebswelle 7 des Schaltgetriebes 5 ist in einem Verbindungsbereich 8 lösbar mit einer Eingangswelle 9 des Getriebes 3 verbunden. Über das Getriebe 3 wird die Antriebskraft der Antriebseinheit 2 auf die linke und rechte Fahrzeugseite verteilt. Demnach weist das Getriebe 3 eine der einen Fahrzeugseite zugeordnete erste Ausgangswelle 10 und eine der anderen Fahrzeugseite zugeordnete zweite Ausgangswelle 11 auf. Die beiden Ausgangswellen 10, 11 verteilen die Antriebskraft in Richtung der Fahrzeugfront 12 und in Richtung des Fahrzeughecks 13 zu mehreren Winkelgetrieben 14 und mit diesen jeweils verbundenen Endantrieben 15, von denen zur Wahrung der Übersichtlichkeit nicht alle mit einem Bezugszeichen versehen sind. Bei den Endantrieben 15 kann es sich im Falle eines Radfahrzeugs um Räder und im Falle eines Kettenfahrzeuges um einen Kettenantrieb handeln. Bei einem Kettenfahrzeug reicht in der Regel ein Endabtrieb pro Seite aus. (siehe Fig. 2)

Wie aus Fig. 1 hervorgeht, ist die Antriebseinheit 2 im Bereich der Fahrzeugfront 12 angeordnet. Das Getriebe 3 ist in Längsrichtung des Fahrzeugs 1 im Wesentlichen mittig angeordnet. Das Getriebe 3 ist breiter als lang. Des Weiteren weist das Getriebe 3 bei einem Kettenfahrzeug zwingend und bei einem Radfahrzeug optional einen Lenkmotor 16 auf. Dieser ist mit der hydraulischen Pumpe 6 der Antriebseinheit 2, insbesondere lösbar, verbunden.

In einem vorliegend nicht explizit dargestellten Ausführungsbeispiel kann das in Fig. 1 dargestellte Fahrzeug 1 auch ohne hydraulische Pumpe 6 und Lenkmotor 16 ausgebildet sein. In diesem Fall wirkt das Getriebe 3 als Differenzial, wie nachstehend noch im Detail erläutert wird.

Fig. 2 zeigt ein alternatives Ausführungsbeispiel des Fahrzeugs 1, das vorliegend insbesondere ein amphibisches Kettenfahrzeug ist. Für diejenigen Merkmale, die im Vergleich zum in Fig. 1 dargestellten ersten Ausführungsbeispiel in ihrer Ausgestaltung und/oder Wirkweise identisch oder zumindest vergleichbar sind, werden gleiche Bezugszeichen verwendet. Sofern diese nicht nochmals detailliert erläutert werden, entspricht deren Ausgestaltung und Wirkweise der der vorstehend bereits beschriebenen Merkmale. Im Unterschied zu dem in Fig. 1 dargestellten Ausführungsbeispiel weist das Fahrzeug 1 im Bereich der Fahrzeugfront 12 auf jeder Seite jeweils nur ein Winkelgetriebe 14 und einen Endantrieb 15 auf. Heckseitig weist das Fahrzeug 1 Schiffsschrauben 17 auf, die mit dem Getriebe 3 verbunden sind.

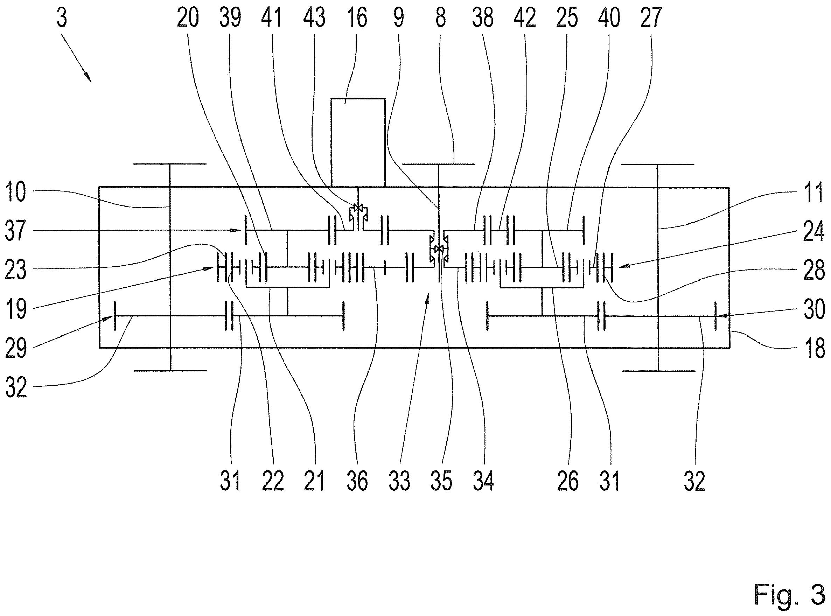

Fig. 3 zeigt ein erstes Ausführungsbeispiel des Getriebes 3, wie dies beispielsweise in einem in Fig. 1 oder 2 dargestellten Fahrzeug, insbesondere Radfahrzeug und/oder Kettenfahrzeuge, verbaut sein kann. Wie bereits vorstehend erwähnt, ist das Getriebe 3 von der Antriebseinheit 2 entkoppelt (vgl. Fig. 1 und Fig. 2). Das Getriebe 3 weist demnach ein Getriebegehäuse 18 auf. In dieses Getriebegehäuse 18 führt von Seiten der vorliegend nicht dargestellten Antriebseinheit 2 die Eingangswelle 9 hinein. Des Weiteren führt auf der einen Fahrzeugseite die erste Ausgangswelle 10 und auf der anderen Fahrzeugseite die zweite Ausgangswelle 11 wieder aus dem Getriebe 3 hinaus.

Das Getriebe 3 weist zwei Summierungsstufen auf, die vorliegend als Planetenstufen 19, 24 ausgebildet sind. Die beiden Planetenstufen 19, 24 sind in einer ersten Getriebeebene angeordnet. Die beiden Planetenstufen 19, 24 sind jeweils einer der beiden Fahrzeugseiten zugeordnet. Demnach ist abbildungsgemäß die erste Planetenstufe 19 der linken Fahrzeugseite und die zweite Planetenstufe 24 der rechten Fahrzeugseite zugeordnet. Die beiden Planetenstufen 19, 24 weisen jeweils ein zentrales Sonnenrad 20, 25 auf, das von einem Hohlrad 23, 28 umgeben ist. Sowohl das Sonnenrad 20, 25 als auch das Hohlrad 23, 28 sind drehbar gelagert. In Radialrichtung sind zwischen dem Sonnenrad 20, 25 und dem äußeren Hohlrad 23, 28 mehrere Planetenräder 22, 27 angeordnet, von denen aus Gründen der Übersichtlichkeit jeweils nur eines mit einem Bezugszeichen versehen ist. Die Planetenräder 22, 27 sind von einem Planetenträger 21, 26 gehalten. Der Planetenträger 21, 26 ist ebenfalls drehbar gelagert. Die Planetenträger 21, 26 sind abtriebsseitigen mit der jeweils zugeordneten Ausgangswelle 10, 11 verbunden.

Gemäß dem vorliegenden Ausführungsbeispiel sind die Planetenträger 21, 26 jeweils über eine Stirnradstufe 29, 30 mit der zugeordneten Ausgangswelle 10, 11 verbunden. Die Stirnradstufen 29, 30 weisen jeweils ein mit dem zugeordneten Planetenträger 21, 26 verbundenes erstes Stirnrad 31 und ein auf der jeweiligen Ausgangswelle 10, 11 angeordnetes zweites Stirnrad 32 auf.

Gemäß Fig. 3 sind die beiden drehbar gelagerten Hohlräder 23, 28 miteinander gekoppelt. Dies erfolgt über eine zwischen den beiden Hohlrädern 23, 28 angeordnete Hohlradstufe 33. Die Hohlradstufe 33 ist vorliegend als Stirnradstufe ausgebildet. Sie umfasst ein Zentralrad 34, das koaxial zur Eingangswelle 9 angeordnet ist. Das Zentralrad 34 ist drehbar auf der Eingangswelle 9 angeordnet und über ein erstes Schaltelement 35 drehfest mit dieser verbindbar. Neben dem Zentralrad 34 umfasst die Hohlradstufe 33 ferner ein Zwischenrad 36, das zwischen dem Zentralrad 34 und dem ersten Hohlrad 23 angeordnet ist. Die beiden Hohlräder 23, 28 weisen jeweils eine Außenverzahnung auf in die im Falle des ersten Hohlrades 23 das Zwischenrad 36 und im Falle des zweiten Hohlrades 28 das Zentralrad 34 einkämmt. Das Zwischenrad 36 dient zur Drehrichtungsumkehrung, so dass die beiden Hohlräder 23, 28 in zueinander entgegengesetzte Richtungen rotiert werden.

Gemäß Fig. 3 weist das Getriebe 3 in einer antriebsseitigen zweiten Getriebeebene eine Koppelstufe 37 auf. Die Koppelstufe 37 verbindet die Sonnenräder 20, 25 der beiden Planetenstufen 19, 24 miteinander. Gemäß dem vorliegenden Ausführungsbeispiel ist die Koppelstufe 37 als Stirnradstufe ausgebildet. Die Koppelstufe 37 weist ein erstes Zentralrad 38 auf. Das erste Zentralrad 38 ist ebenso wie das zweite Zentralrad 34 der Hohlradstufe 33 koaxial zur Eingangswelle 9 angeordnet. Des Weiteren ist auch das erste Zentralrad 38 drehbar gegenüber der Eingangswelle 9 gelagert. Über das erste Schaltelement 35 ist das erste Zentralrad 38 drehfest mit der Eingangswelle 9 verbindbar.

Neben dem ersten Zentralrad 38 umfasst die Koppelstufe 37 des weiteren zwei Außenräder 39, 40, die jeweils einem der beiden Planetenstufen 19, 24 zugeordnet sind. Die Außenräder 39, 40 sind hierbei jeweils durch das zugeordnete Sonnenrad 20, 25 ausgebildet oder drehfest auf diesem festgelegt. Des Weiteren umfasst die Koppelstufe 37 ein erstes Zwischenrad 41, das zwischen dem ersten Zentralrad 38 und dem ersten Außenrad 39 angeordnet ist. Zwischen dem ersten Zentralrad 38 und dem zweiten Außenrad 40 ist ein weiteres zweites Zwischenrad 42 angeordnet.

Neben dem ersten Schaltelement 35 weist das Getriebe 3 ferner ein zweites Schaltelement 43 auf. Dieses ist im Bereich zwischen dem Lenkmotor 16 und dem ersten Zwischenrad 41 der Koppelstufe 37 angeordnet. In einer ersten Schaltstellung des zweiten Schaltelements 43 ist der Lenkmotor 16 von der Koppelstufe 37, insbesondere vom ersten Zwischenrad 41, entkoppelt. In einer zweiten Schaltstellung ist die Koppelstufe 37, insbesondere das erste Zwischenrad 41, drehfest mit einer Motorwelle des Lenkmotors 16 gekoppelt.

Wie bereits vorstehend erwähnt, ist auch das erste Schaltelement 35 zwischen zumindest zwei Schaltstellungen schaltbar. In einer ersten Schaltstellung des ersten Schaltelements 35 ist die Eingangswelle 9 drehfest mit dem zweiten Zentralrad 34 der Hohlradstufe 33 gekoppelt. Hierdurch wird das Antriebsmoment der Eingangswelle 9 über die Hohlradstufe 33 auf die beiden Hohlräder 23, 28 der beiden Planetenstufen 19, 24 übertragen. In einer zweiten Schaltstellung des ersten Schaltelements 35 ist das zweite Zentralrad 34 von der Eingangswelle 9 entkoppelt und stattdessen das erste Zentralrad 38 mit dieser gekoppelt. Infolgedessen wird das Antriebsmoment von der Eingangswelle 9 über die Koppelstufe 37 auf die beiden Sonnenräder 20, 25 der beiden Planetenstufen 19, 24 übertragen.

Bei Geradeausfahrt des Fahrzeugs 1 ist das erste Schaltelement 35 in die erste Schaltstellung geschalten. Hierdurch wird, wie vorstehend beschrieben, das über die Eingangswelle 9 eingebrachte Antriebsmoment zu gleichen Teilen über die Hohlradstufe 33 auf die beiden Hohlräder 23, 28 der beiden Planetenstufe 19, 24 aufgeteilt und über deren Planetenträger 21, 26, insbesondere mittelbar über die nachgeschalteten Stirnradstufen 29, 30, auf die jeweiligen Ausgangswellen 10, 11 übertragen.

Gemäß einer ersten Variante kann das zweite Schaltelement 43 im Normalbetrieb des Fahrzeugs mit der Koppelstufe 37 gekoppelt sein, wobei sich das zweite Schaltelement 43 hierfür in seiner zweiten Schaltstellung befindet. Infolgedessen ist der Lenkmotor 16 mit der Koppelstufe 37 gekoppelt. Hierdurch sind die beiden Sonnenräder 20, 25 drehfest gehalten, so dass sich die Planetenräder 22, 27 auf den feststehenden Sonnenrädern 20, 25 abwälzen. In diesem Normalbetrieb des Getriebes 3 bildet die Koppelstufe 37 ein Lenkgetriebe, mittels dem zum Lenken des Fahrzeugs 1 einem der beiden Ausgangswellen 10, 11 eine höhere Drehzahl und der anderen eine geringere Drehzahl übermittelt werden kann. Hierfür wird vom Lenkmotor 16 ein Drehmoments in die Koppelstufe 37 eingebracht, wodurch die beiden Sonnenräder 20, 25 derart in Rotation versetzt werden, dass einer der beiden Planetenträger 21, 26 schneller und der andere langsamer rotiert wird. Hierdurch werden die Räder beim Radfahrzeug bzw. der Kettenantrieb des Kettenfahrzeugs auf einer der beiden Fahrzeugseiten schneller angetrieben als auf der anderen Fahrzeugseite, wodurch das Fahrzeug um seine Hochachse gegiert wird.

Alternativ kann der Lenkmotor 16 von der Koppelstufe 37 auch entkoppelt sein, wobei sich das zweite Schaltelement 43 hierfür in seiner ersten Schaltstellung befindet. In diesem Fall wirkt die Koppelstufe 37 als Differenzialgetriebe. Es sorgt demnach für einen Drehzahlausgleich zwischen den beiden Planetenträgern 21, 26, indem die beiden Sonnenräder 20, 25 durch ihre Verbindung über die Koppelstufe 37 eine entsprechende Ausgleichsbewegung durchführen können. Dies ist insbesondere bei Radfahrzeugen relevant. Gemäß einem vorliegend nicht explizit dargestellten Ausführungsbeispiel kann das Getriebe 3, insbesondere für Radfahrzeuge, auch ohne Lenkmotor 16 und zweitem Schaltelement 43 ausgebildet sein, wenn lediglich eine Differenzialwirkung und keine Lenkwirkung erwünscht ist.

Das Getriebe 3 stellt ohne den Lenkmotor 16 im Radfahrzeug ein Differenzialgetriebe dar. Mit dem Lenkmotor 16 ist es ein Lenkgetriebe für ein Kettenfahrzeug.

Wie bereits vorstehend erläutert, ist jedoch das in Fig. 3 dargestellte Getriebe vorzugsweise mit einem entsprechenden Lenkmotor 16 und dem zweiten Schaltelement 43 ausgebildet, so dass im Normalbetrieb des Fahrzeugs bei in der zweiten Schaltstellung befindlichen zweiten Schaltelement 43 der Gierwinkel des Fahrzeugs aktiv beeinflusst werden kann. Dies erfolgt über den Lenkmotor 16, der die Antriebskraft gezielt auf die linke und rechte Fahrzeugseite verteilt.

Um eine Pivotdrehung durchführen zu können, bei der das Fahrzeug an Ort und Stelle um seine Hochachse gedreht wird, wird das erste Schaltelement 35 in seine zweite Schaltstellung geschaltet. In dieser Schaltstellung ist die Eingangswelle 9 über das erste Schaltelement 35 von der Hohlradstufe 33 entkoppelt und mit der Koppelstufe 37 gekoppelt. Ferner ist der Lenkmotor 16 bei Vorhandensein entkoppelt. Das über die Eingangswelle 9 in das Getriebe 3 eingebrachte Antriebsmoment wird demnach nicht auf die Hohlräder 23, 28 der Planetenstufe 19, 24, sondern über die Koppelstufe 37 auf die Sonnenräder 20, 25 übertragen. Die beiden Hohlräder 23, 28 sind hierbei vorzugsweise festgelegt, so dass diese nicht rotieren können. Die kann beispielsweise über ein Arretierelement erfolgen. Die Räder oder der Kettenantrieb der einen Fahrzeugseite wird hierdurch vorwärts und zugleich werden die Räder oder der Kettenantrieb der anderen Seite rückwärts rotiert, so dass das Fahrzeug an Ort und Stelle eine Pivotdrehung um seine Hochachse durchführt. Vorteilhafterweise wird gemäß dem vorliegenden Getriebe 3 die Pivotdrehung somit nicht mehr durch den Lenkmotor 16 durchgeführt, sondern über das an der Eingangswelle 9 anliegende Drehmoment. Hierdurch kann der Lenkmotor 16 kleiner dimensioniert werden.

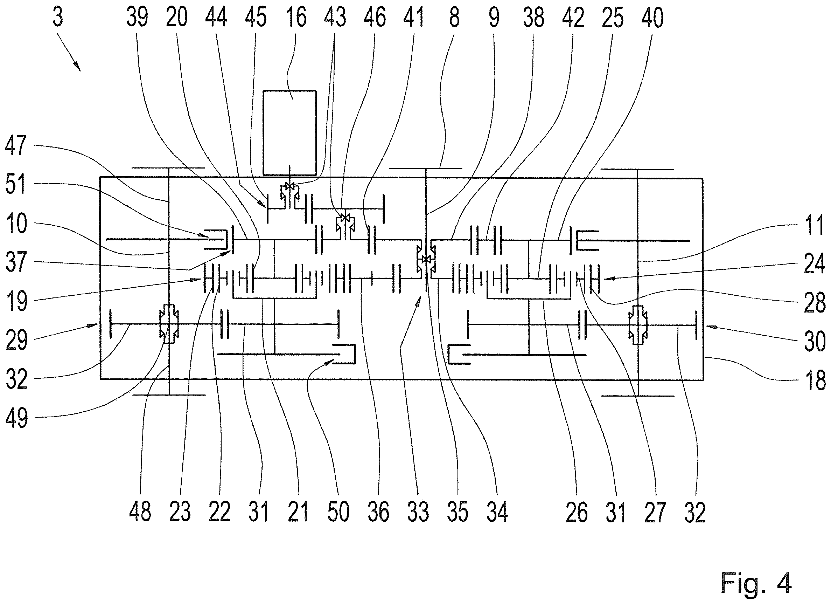

Fig. 4 zeigt ein zweites Ausführungsbeispiel des Getriebes 3. Bei der nachfolgenden Beschreibung des in Fig. 4 dargestellten alternativen Ausführungsbeispiels werden für Merkmale, die im Vergleich zu dem in Fig. 3 dargestellten ersten Ausführungsbeispiel in ihrer Ausgestaltung und/oder Wirkweise identisch oder zumindest vergleichbar sind, gleiche Bezugszeichen verwendet. Sofern diese nicht nochmals detailliert erläutert werden, entspricht deren Ausgestaltung und Wirkweise der der vorstehend bereits beschriebenen Merkmale.

Im Unterschied zum in Fig. 3 dargestellten Ausführungsbeispiel weist das in Fig. 4 dargestellte Getriebe 3 eine zusätzliche Lenkmotorstufe 44 auf. Diese ist vorliegend ebenfalls als Stirnradstufe ausgebildet. Die Lenkmotorstufe 44 weist ein lenkmotorseitiges erstes Zahnrad 45 und ein in dieses einkämmendes koppelstufenseitiges zweites Zahnrad 46 auf. Das zweite Schaltelement 43 kann gemäß Fig. 4 zwischen dem Lenkmotor 16 und der Lenkmotorstufe 44 angeordnet sein. In der ersten Schaltstellung ist demnach die Motorwelle des Lenkmotors 16 von der Lenkmotorstufe 44, vorliegend insbesondere von dem ersten Zahnrad 45, entkoppelt. In der zweiten Schaltstellung verbindet das zweite Schaltelement 43 die Motorwelle des Lenkmotors 16 drehfest mit dem ersten Zahnrad 45. Alternativ kann das zweite Schaltelement 43 aber auch ebenso zwischen der Lenkmotorstufe 44 und der Koppelstufe 37 angeordnet sein. In diesem Fall verbindet das zweite Schaltelement 43 das zweite Zahnrad 46 der Lenkmotorstufe 44 drehfest mit der Koppelstufe 37, vorliegend insbesondere mit dem ersten Zwischenrad 41.

Bei dem in Fig. 4 dargestellten Ausführungsbeispiel sind die beiden Ausgangswellen 10, 11 des Weiteren zweiteilig ausgebildet, so dass diese jeweils einen ersten Wellenteil 47 und einen zweiten Wellenteil 48 aufweisen, wobei aus Gründen der Übersichtlichkeit lediglich eine der beiden Ausgangswellen 10, 11 mit Bezugszeichen versehen ist. Ferner weist das Getriebe 3 ein drittes Schaltelement 49 auf, das entweder den ersten Wellenteil 47 oder den zweiten Wellenteil 48 mit der jeweils zugeordneten Stirnradstufe 29, insbesondere mit dem zweiten Stirnrad 32, koppelt. Die vorstehend beschriebene Variante ist insbesondere dann vorteilhaft, wenn das Fahrzeug gemäß dem in Fig. 2 dargestellten Ausführungsbeispiel als Amphibienfahrzeug ausgebildet ist. Hierdurch kann die Antriebskraft durch entsprechendes Schalten des dritten Schaltelements 49 entweder zu dem Endantrieb 15 oder zu der Schiffsschraube 17 geleitet werden.

Des Weiteren umfasst das Getriebe 3 gemäß dem in Fig. 4 dargestellten Ausführungsbeispiel für jede Antriebsseite eine erste Bremse 50, die mit dem jeweiligen Planetenträger 21, 26 gekoppelt ist, so dass dieser abgebremst werden kann. Zusätzlich oder alternativ kann das Getriebe 3 eine zweite Bremse 51 aufweisen, die im Bereich der jeweiligen Ausgangswelle 10, 11 angeordnet ist, so dass diese entsprechend abgebremst werden kann. Bei einer zweiteiligen Ausbildung der Ausgangswellen 10, 11 ist die zweite Bremse 51 vorzugsweise im Bereich des ersten Wellenteil 47 angeordnet, der dem Endantrieb 15 zugeordnet ist.

Die in der vorstehenden Beschreibung erwähnten Schaltelemente 35, 34, 49 sind vorzugsweise als Kupplungen, insbesondere Klauenkupplungen oder Lamellenkupplungen, ausgebildet.

### Bezugszeichen

- 1: Fahrzeug
- 2: Antriebseinheit
- 3: Getriebe
- 4: Antriebsmotor
- 5: Schaltgetriebe
- 6: Hydraulische Pumpe
- 7: Abtriebswelle
- 8: Verbindungsbereich
- 9: Eingangswelle
- 10: erste Ausgangswelle
- 11: zweite Ausgangswelle
- 12: Fahrzeugfront
- 13: Fahrzeugheck
- 14: Winkelgetriebe
- 15: Endantrieb
- 16: Lenkmotor
- 17: Schiffsschrauben
- 18: Getriebegehäuse
- 19: erste Planetenstufe
- 20: erstes Sonnenrad
- 21: erster Planetenträger
- 22: erstes Planetenrad
- 23: erstes Hohlrad
- 24: zweite Planetenstufe
- 25: zweites Sonnenrad
- 26: zweiter Planetenträger
- 27: zweites Planetenrad
- 28: zweites Hohlrad
- 29: erste Stirnradstufe
- 30: zweite Stirnradstufe
- 31: erstes Stirnrad
- 32: zweites Stirnrad
- 33: Hohlradstufe
- 34: zweites Zentralrad
- 35: erstes Schaltelement
- 36: drittes Zwischenrad
- 37: Koppelstufe
- 38: erstes Zentralrad
- 39: erstes Außenrad
- 40: zweites Außenrad
- 41: erstes Zwischenrad
- 42: zweites Zwischenrad
- 43: zweites Schaltelement
- 44: Lenkmotorstufe
- 45: erstes Zahnrad
- 46: zweites Zahnrad
- 47: erster Wellenteil
- 48: zweiter Wellenteil
- 49: drittes Schaltelement
- 50: erste Bremse
- 51: zweite Bremse

## Patentansprüche

1. Getriebe (3) für Rad- und/oder Kettenfahrzeuge mit einer antriebsseitigen Eingangswelle (9), einer im eingebauten Zustand des Getriebes (3) der einen Fahrzeugseite zugeordneten ersten Planetenstufe (19), deren erster Planetenträger (21) mit einer ersten Ausgangswelle (10) verbunden ist, einer im eingebauten Zustand des Getriebes der anderen Fahrzeugseite zugeordneten zweiten Planetenstufe (24), deren zweiter Planetenträger (26) mit einer zweiten Ausgangswelle (11) verbunden ist, einer den beiden Planetenstufen (19, 24) zugeordneten Koppelstufe (37), mittels der die Sonnenräder (20, 25) der beiden Planetenstufen (19, 24) miteinander verbunden sind, **dadurch gekennzeichnet, dass** das Getriebe (3) ein erstes Schaltelement (35) aufweist, mittels dem die Eingangswelle (9) in einer ersten Schaltstellung mit den Hohlrädern (23, 28) der beiden Planetenstufen (19, 24) und in einer zweiten Schaltstellung mit der Koppelstufe (37) verbunden ist, dass die Koppelstufe (37) zumindest zwei ineinander kämmende Zahnräder umfasst und als Stirnradstufe ausgebildet ist, und dass sich die beiden Planetenstufen (19, 24) in einer ersten Getriebeebene und die Koppelstufe (37) in einer antriebsseitig versetzten zweiten Getriebeebene befinden.

2. Getriebe nach Anspruch 1, **dadurch gekennzeichnet, dass** die Koppelstufe (37) ein koaxial zur Eingangswelle (9) angeordnetes und/oder über das erste Schaltelement (35) mit der Eingangswelle (9) koppelbares erstes Zentralrad (38), zwei jeweils einem der beiden Planetenstufen (19, 24) zugeordnete Außenräder (39, 40), ein erstes Zwischenrad (41), das zwischen dem ersten Zentralrad (38) und dem der ersten Planetenstufe (19) zugeordneten ersten Außenrad (39) angeordnet ist, und/oder ein zweites Zwischenrad (42), das zwischen dem ersten Zentralrad (38) und dem der zweiten Planetenstufe (24) zugeordneten zweiten Außenrad (40) angeordnet ist, umfasst.

3. Getriebe nach einem der vorherigen Ansprüche, **dadurch gekennzeichnet, dass** das Getriebe (3) einen, insbesondere hydraulischen, Lenkmotor (16) und ein zweites Schaltelement (43) aufweist, mittels dem der Lenkmotor (16) in einer ersten Schaltstellung von der Koppelstufe (37) entkoppelt und in einer zweiten Schaltstellung mit dieser gekoppelt ist.

4. Getriebe nach einem der vorherigen Ansprüche, **dadurch gekennzeichnet, dass** die beiden Hohlräder (23, 28), insbesondere über eine Hohlradstufe (33), miteinander verbunden sind, wobei die Hohlradstufe (33) vorzugsweise als Stirnradstufe ausgebildet ist

5. Getriebe nach dem vorherigen Anspruch 4, **dadurch gekennzeichnet, dass** die Hohlradstufe (33) ein koaxial zur Eingangswelle (9) angeordnetes und/oder über das erste Schaltelement (35) mit der Eingangswelle (9) koppelbares zweites Zentralrad (34) und/oder ein zwischen einem der beiden Hohlräder (23, 28) und dem zweiten Zentralrad (34) angeordnetes drittes Zwischenrad (36) aufweist.

6. Getriebe nach einem der vorherigen Ansprüche, **dadurch gekennzeichnet, dass** die Koppelstufe (37) bei in der ersten Schaltstellung befindlichem ersten Schaltelement (35) und/oder bei in der ersten Schaltstellung befindlichem zweiten Schaltelement (43) ein Differenzialgetriebe ausbildet.

7. Getriebe nach einem der vorherigen Ansprüche 3 bis 6, **dadurch gekennzeichnet, dass** die Koppelstufe (37) bei in der ersten Schaltstellung befindlichem ersten Schaltelement (35) und in der zweiten Schaltstellung befindlichen zweiten Schaltelement (43) ein Lenkgetriebe ausbildet.

8. Getriebe nach einem der vorherigen Ansprüche 3 bis 7, **dadurch gekennzeichnet, dass** die Koppelstufe (37) bei in der zweiten Schaltstellung befindlichem ersten Schaltelement (35) und in der ersten Schaltstellung befindlichen zweiten Schaltelement (43) ein Pivotgetriebe bildet.

9. Getriebe nach einem der vorherigen Ansprüche, **dadurch gekennzeichnet, dass** das Getriebe (3) eine, insbesondere als Stirnradstufe ausgebildete, Lenkmotorstufe (44) aufweist, die vorzugsweise mit der Koppelstufe (37) verbunden und/oder verbindbar ist und/oder ein lenkmotorseitiges erstes Zahnrad (45) und ein koppelstufenseitiges zweites Zahnrad (46) aufweist.

10. Getriebe nach dem vorherigen Anspruch 9, **dadurch gekennzeichnet, dass** das zweite Schaltelement (43) zwischen dem Lenkmotor (16) und der Lenkmotorstufe (44) oder zwischen der Lenkmotorstufe (44) und der Koppelstufe (37) angeordnet ist.

11. Getriebe nach einem der vorherigen Ansprüche, **dadurch gekennzeichnet, dass** jedem der beiden Planetenstufen (19, 24) jeweils eine Stirnradstufe (29, 30) nachgeschaltet ist, die den jeweiligen Planetenträger (21, 26) mit der zugeordneten Ausgangswelle (10, 11) verbindet, und/oder zumindest eine Bremse (50, 51) nachgeschalten ist, die am jeweiligen Planetenträger (21, 26) oder an der jeweiligen Ausgangswelle (10, 11) angreift.

12. Getriebe nach einem der vorherigen Ansprüche, **dadurch gekennzeichnet, dass** die beiden Ausgangswellen (10, 11) zweigeteilt sind und jeweils einen sich im Eingebauten Zustand des Getriebes in Richtung der Fahrzeugfront (12) erstreckenden ersten Wellenteil (47) und einen in Richtung des Fahrzeughecks (13) erstreckenden zweiten Wellenteil (48) aufweisen.

13. Getriebe nach dem vorherigen Anspruch 12, **dadurch gekennzeichnet, dass** jeder Ausgangswelle (10, 11) ein drittes Schaltelement (49) zugeordnet ist, das in einer ersten Schaltstellung den ersten Wellenteil (47) und in einer zweiten Schaltstellung den zweiten Wellenteil (48) mit der jeweiligen Planetenstufe (19, 24) verbindet.

14. Getriebe nach einem der vorherigen Ansprüche, **dadurch gekennzeichnet, dass** das zumindest eines der Schaltelemente (35, 43, 49) als Kupplung, insbesondere Klauenkupplung und/oder Lamellenkupplung, ausgebildet ist.

## Claims

1. Transmission (3) for wheeled and/or tracked vehicles with a drive-side input shaft (9), with a first planet stage (19) which, in the installed state of the transmission (3), is assigned to the one vehicle side and whose first planet carrier (21) is connected to a first output shaft (10), with a second planet stage (24) which, in the installed state of the transmission, is assigned to the other vehicle side and whose second planet carrier (26) is connected to a second output shaft (11), with a coupling stage (37) which is assigned to the two planet stages (19, 24) and by means of which the sun gears (20, 25) of the two planet stages (19, 24) are connected to one another, **characterized in that** the transmission (3) has a first shift element (35) by means of which the input shaft (9) is connected to the ring gears (23, 28) of the two planet stages (19, 24) in a first shift position and to the coupling stage (37) in a second shift position, **in that** the coupling stage (37) comprises at least two inter-engaging gearwheels and is designed as a spur gear stage, and **in that** the two planet stages (19, 24) are situated in a first transmission plane, and the coupling stage (37) is situated in a second transmission plane which is offset on the drive side.

2. Transmission according to Claim 1, **characterized in that** the coupling stage (37) comprises a first central gear (38) which is arranged coaxially to the input shaft (9) and/or can be coupled to the input shaft (9) via the first shift element (35), two outer gears (39, 40) each assigned to one of the two planet stages (19, 24), a first intermediate gear (41) which is arranged between the first central gear (38) and the first outer gear (39) assigned to the first planet stage (19), and/or a second intermediate gear (42) which is arranged between the first central gear (38) and the second outer gear (40) assigned to the second planet stage (24).

3. Transmission according to either of the preceding claims, **characterized in that** the transmission (3) has an, in particular hydraulic, steering motor (16) and a second shift element (43) by means of which the steering motor (16) is decoupled from the coupling stage (37) in a first shift position and coupled thereto in a second shift position.

4. Transmission according to one of the preceding claims, **characterized in that** the two ring gears (23, 28) are connected to one another, in particular via a ring gear stage (33), wherein the ring gear stage (33) is preferably designed as a spur gear stage.

5. Transmission according to the preceding Claim 4, **characterized in that** the ring gear stage (33) has a second central gear (34) which is arranged coaxially to the input shaft (9) and/or can be coupled to the input shaft (9) via the first shift element (35), and/or a third intermediate gear (36) which is arranged between one of the two ring gears (23, 28) and the second central gear (34).

6. Transmission according to one of the preceding claims, **characterized in that**, with the first shift element (35) situated in the first shift position and/or with the second shift element (43) situated in the first shift position, the coupling stage (37) forms a differential transmission.

7. Transmission according to one of the preceding Claims 3 to 6, **characterized in that**, with the first shift element (35) situated in the first shift position and with the second shift element (43) situated in the second shift position, the coupling stage (37) forms a steering transmission.

8. Transmission according to one of the preceding Claims 3 to 7, **characterized in that**, with the first shift element (35) situated in the second shift position and with the second shift element (43) situated in the first shift position, the coupling stage (37) forms a pivot transmission.

9. Transmission according to one of the preceding claims, **characterized in that** the transmission (3) has a steering motor stage (44) which is designed in particular as a spur gear stage and which is and/or can be preferably connected to the coupling stage (37) and/or has a steering motor-side first gearwheel (45) and a coupling stage-side second gearwheel (46).

10. Transmission according to the preceding Claim 9, **characterized in that** the second shift element (43) is arranged between the steering motor (16) and the steering motor stage (44) or between the steering motor stage (44) and the coupling stage (37).

11. Transmission according to one of the preceding claims, **characterized in that** a respective spur gear stage (29, 30) is arranged downstream of each of the two planet stages (19, 24) and connects the respective planet carrier (21, 26) to the associated output shaft (10, 11), and/or there is arranged downstream at least one brake (50, 51) which acts on the respective planet carrier (21, 26) or on the respective output shaft (10, 11).

12. Transmission according to one of the preceding claims, **characterized in that** the two output shafts (10, 11) are in two parts and in each case have a first shaft part (47) which, in the installed state of the transmission, extends in the direction of the vehicle front (12) and a second shaft part (48) which extends in the direction of the vehicle rear (13) .

13. Transmission according to the preceding Claim 12, **characterized in that** each output shaft (10, 11) is assigned a third shift element (49) which, in a first shift position, connects the first shaft part (47) to the respective planet stage (19, 24) and, in a second shift position, connects the second shaft part (48) to the respective planet stage (19, 24) .

14. Transmission according to one of the preceding claims, **characterized in that** at least one of the shift elements (35, 43, 49) is designed as a clutch, in particular dog clutch and/or multi-disc clutch.

## Revendications

1. Boîte de transmission (3) pour véhicules à roues et/ou à chenilles, comprenant un arbre d'entrée (9) côté entraînement, un premier étage planétaire (19) associé à un côté du véhicule dans l'état monté de la boîte de transmission (3), dont le premier porte-satellites (21) est relié à un premier arbre de sortie (10), un deuxième étage planétaire (24) associé à l'autre côté du véhicule dans l'état monté de la boîte de transmission, dont le deuxième porte-satellites (26) est relié à un deuxième arbre de sortie (11), un étage d'accouplement (37) associé aux deux étages planétaires (19, 24), au moyen duquel les roues solaires (20, 25) des deux étages planétaires (19, 24) sont reliées entre elles, **caractérisée en ce que** la boîte de transmission (3) possède un premier élément de changement de rapport (35) au moyen duquel l'arbre d'entrée (9), dans une première position de rapport, est relié aux couronnes de train planétaire (23, 28) des deux étages planétaires (19, 24) et, dans une deuxième position de rapport, est relié à l'étage d'accouplement (37), **en ce que** l'étage d'accouplement (37) comporte au moins deux roues dentées qui s'engrènent l'une dans l'autre et est réalisé en tant qu'étage à pignon droit, et **en ce que** les deux étages planétaires (19, 24) se trouvent dans un premier plan de boîte de transmission et l'étage d'accouplement (37) dans un deuxième plan de boîte de transmission décalé côté entraînement.

2. Boîte de transmission selon la revendication 1, **caractérisée en ce que** l'étage d'accouplement (37) comporte une première roue centrale (38) disposée de manière coaxiale par rapport à l'arbre d'entrée (9) et/ou pouvant être couplée à l'arbre d'entrée (9) par le biais du premier élément de changement de rapport (35), deux roues extérieures (39, 40) respectivement associées à l'un des deux étages planétaires (19, 24), une première roue intermédiaire (41) qui est disposée entre la première roue centrale (38) et la première roue extérieure (39) associée au premier étage planétaire (19) et/ou une deuxième roue intermédiaire (42) qui est disposée entre la première roue centrale (38) et la deuxième roue extérieure (40) associée au deuxième étage planétaire (24).

3. Boîte de transmission selon l'une des revendications précédentes, **caractérisée en ce que** la boîte de transmission (3) possède un moteur de direction (16), notamment hydraulique, et un deuxième élément de changement de rapport (43) au moyen duquel le moteur de direction (16) est désaccouplé de l'étage d'accouplement (37) dans une première position de rapport et accouplé à celui-ci dans une deuxième position de rapport.

4. Boîte de transmission selon l'une des revendications précédentes, **caractérisée en ce que** les deux couronnes de train planétaire (23, 28) sont reliées entre elles, notamment par le biais d'un étage de couronne de train planétaire (33), l'étage de couronne de train planétaire (33) étant de préférence réalisé sous la forme d'un étage à pignon droit.

5. Boîte de transmission selon la revendication précédente 4, **caractérisée en ce que** l'étage de couronne de train planétaire (33) possède une deuxième roue centrale (34) disposée de manière coaxiale par rapport à l'arbre d'entrée (9) et/ou pouvant être couplée à l'arbre d'entrée (9) par le biais du premier élément de changement de rapport (35) et/ou une troisième roue intermédiaire (36) qui est disposée entre l'une des deux couronnes de train planétaire (23, 28) et la deuxième roue centrale (34).

6. Boîte de transmission selon l'une des revendications précédentes, **caractérisée en ce que** lorsque le premier élément de changement de rapport (35) se trouve dans la première position de rapport et/ou lorsque le deuxième élément de changement de rapport (43) se trouve dans la première position de rapport, l'étage d'accouplement (37) forme une transmission différentielle.

7. Boîte de transmission selon l'une des revendications précédentes 3 à 6, **caractérisée en ce que** lorsque le premier élément de changement de rapport (35) se trouve dans la première position de rapport et lorsque le deuxième élément de changement de rapport (43) se trouve dans la deuxième position de rapport, l'étage d'accouplement (37) forme un mécanisme de direction.

8. Boîte de transmission selon l'une des revendications précédentes 3 à 7, **caractérisée en ce que** lorsque le premier élément de changement de rapport (35) se trouve dans la première position de rapport et lorsque le deuxième élément de changement de rapport (43) se trouve dans la première position de rapport, l'étage d'accouplement (37) forme une transmission à pivot.

9. Boîte de transmission selon l'une des revendications précédentes, **caractérisée en ce que** la boîte de transmission (3) possède un étage de moteur de direction (44), notamment réalisé sous la forme d'un étage à pignon droit, lequel est de préférence relié et/ou peut être relié à l'étage d'accouplement (37) et/ou possède une première roue dentée (45) côté moteur de direction et une deuxième roue dentée (46) côté étage d'accouplement.

10. Boîte de transmission selon la revendication précédente 9, **caractérisée en ce que** le deuxième élément de changement de rapport (43) est disposé entre le moteur de direction (16) et l'étage de moteur de direction (44) ou entre l'étage de moteur de direction (44) et l'étage d'accouplement (37).

11. Boîte de transmission selon l'une des revendications précédentes, **caractérisée en ce qu'**un étage à pignon droit (29, 30) est respectivement monté en aval de chacun des deux étages planétaires (19, 24), lequel relie les porte-satellites (21, 26) respectifs à l'arbre de sortie (10, 11) associé, et/ou au moins un frein (50, 51) est monté en aval, lequel est appliqué sur le porte-satellites (21, 26) respectif ou sur l'arbre de sortie (10, 11) respectif.

12. Boîte de transmission selon l'une des revendications précédentes, **caractérisée en ce que** les deux arbres de sortie (10, 11) sont divisés en deux et possèdent respectivement une première partie d'arbre (47) qui, dans l'état monté de la boîte de transmission, s'étend en direction de l'avant du véhicule (12) et une deuxième partie d'arbre (48) qui s'étend en direction de l'arrière du véhicule (13).

13. Boîte de transmission selon la revendication précédente 12, **caractérisée en ce qu'**un troisième élément de changement de rapport (49) est associé à chaque arbre de sortie (10, 11) qui, dans une première position de rapport, relie la première partie d'arbre (47) et, dans une deuxième position de rapport, la deuxième partie d'arbre (48) à l'étage planétaire (19, 24) respectif.

14. Boîte de transmission selon l'une des revendications précédentes, **caractérisée en ce qu'**au moins l'un des éléments de changement de rapport (35, 43, 49) est réalisé sous la forme d'un accouplement, notamment d'un accouplement à griffes et/ou d'un accouplement à lamelles.
